# EUROPÄISCHE PATENTSCHRIFT

(11) **EP 0 991 540 B1**
(45) Veröffentlichungstag und Bekanntmachung des Hinweises auf die Patenterteilung: **19.09.2001**
(21) Anmeldenummer: 98936375.9
(22) Anmeldetag: 19.06.1998
(51) Int. Cl.: B60K 15/06, B60K 15/077

(54) **TANKSYSTEM**
TANK SYSTEM
SYSTEME DE RESERVOIR

(30) Priorität: 01.07.1997 DE 19727923
(43) Veröffentlichungstag der Anmeldung: 12.04.2000
(73) Patentinhaber: Mannesmann VDO Aktiengesellschaft, 60388 Frankfurt am Main (DE)
(72) Erfinder: RUMPF, Bernd, D-61130 Nidderau (DE)
(74) Vertreter: Klein, Thomas, Dipl.-Ing. (FH)
(86) Internationale Anmeldenummer: EP9803754
(87) Internationale Veröffentlichungsnummer: WO9901309

(56) Entgegenhaltungen:
- EP-A- 0 795 739
- DE-A- 3 224 919

## Beschreibung

Die Erfindung bezieht sich auf ein Tanksystem, insbesondere ein Kraftstofftanksystem mit den Merkmalen des Oberbegriffs des Patentanspruchs 1, sowie ein Verfahren zum Steuern und Betreiben eines solchen Tanksystems.

Es wurde schon vorgeschlagen (ältere Patentanmeldung 196 10 154.9), innerhalb eines Kraftfahrzeug-Haupttanks ein stets vorrangig aufgefülltes Zusatz- oder Reservevolumen vorzusehen, das im Bedarfsfall (Absinken des Haupttank-Füllstandes unter einen vorbestimmten Mindestwert) mittels eines schaltbaren Ventils selbsttätig freigegeben wird. Zur Verbesserung der Fahrerinformation über den verfügbaren Kraftstoffvorrat wird gleichzeitig mit der Reserve-Freigabe ein diesen Vorgang anzeigendes Signal und/oder eine genau anzeigende bzw. hoch auflösende Zusatzanzeige der Restkraftstoffmenge aktiviert. Damit kann der Fahrzeugführer die Restreichweite seines Fahrzeugs genauer abschätzen. Man macht sich dabei zunutze, daß die Geometrie des Zusatzvolumens einfacher als die heutiger Haupttanks ist, denn letztere sind im Sinne einer optimalen Raumausnutzung mitunter sehr verwinkelt geformt und erschweren damit die genaue Erfassung und Anzeige des Füllstands.

Der Reservevorrat wird in den Haupttank bzw. in einen Schwalltopf, vorzugsweise direkt an einer Ansaugseite der Kraftstoffpumpe freigegeben. Das Zusatzvolumen wird vorzugsweise direkt aus dem Zulaufrohr (auch Tankstutzen) gefüllt.

Der genannte Schwalltopf bildet oft eine Baueinheit (Kraftstoffördereinheit) mit einer in ihn eingesetzten Kraftstoffpumpe. Er befindet sich normalerweise direkt über dem Tankboden und wird stets gefüllt gehalten. Zum Nachfüllen im Betrieb werden z. B. Saugstrahlpumpen verwendet, die von Vorlauf- oder Rücklauf-Kraftstoffströmen betrieben werden und ständig einen Volumenstrom aus dem Haupttank in den Schwalltopf fördern. Es gibt auch Lösungen mit zweistufigen Kraftstoffpumpen, deren erste Stufe aus dem Haupttank in den Schwalltopf fördert, deren zweite Stufe dann vom Schwalltopf aus den Vergaser oder die Einspritzpumpe beliefert.

Überschußmengen laufen über den oberen Rand des Schwalltopfs zurück in den Haupttank. Geeignete Mittel (Schwallbleche, Labyrinthsysteme) verhindern auch bei großen Beschleunigungen oder Verzögerungen des Fahrzeugs ein ungewolltes Entleeren des Schwalltopfs. Bei dem bekannten System wird die Umschaltung des Reserve-Freigabe-Ventils zwar durch einen im Schwalltopf selbst angeordneten Füllstandsgrenzschalter gesteuert. Obwohl davon auszugehen ist, daß der Schwalltopf bei hinreichendem Kraftstoffvorrat im Haupttank stets gefüllt sein wird, ist es in dieser Konfiguration nicht auszuschließen, daß das Reservevolumen bei einem nur vorübergehenden Kraftstoffmangel im Schwalltopf vorzeitig freigegeben wird und dann bis zum nächsten Tanken verbraucht ist.

Es ist weiterhin ein gattungs gemässes Tanksystem bekannt, die einen in einem Haupttank angeordneten Hauptsensor und einen in einem Nebentank angeordneten Nebensensor für den Füllstand besitzt (DE 32 24 919 A1). Das in den Nebentank vorhandenen Volumen dient als Reserve und wird angezeigt. Die angezeigte Reserve ist jedoch abhängig von Füllstandssignal des Hauptsensors im Haupttank. Da im Haupttank nur die eine Meßstelle vorhanden ist, liefert der Hauptsensor Signale, die in Abhängigkeit von Fahrsituationen verschieden zum tatsächlichen Füllstand sind. Damit liefert auch die Reserveanzeige vom tatsächlichen Füllstand abweichende Situationen.

Der Erfindung liegt die Aufgabe zugrunde, das eingangs geschilderte Kraftstofftanksystem noch weiter zu verbessern und ein verbessertes Verfahren zum Steuern und Betreiben eines Tanksystems anzugeben.

Diese Aufgabe wird bezüglich der Vorrichtungsmerkmale erfindungsgemäß mit den kennzeichnenden Merkmalen des Patentanspruchs 1 gelöst. Das Tanksystem wird wesentlich vereinfacht und damit weniger aufwendig, wenn der Inhalt des Schwalltopfes direkt als Reservevolumen genutzt wird.

Man kann dann über den Wegfall des separaten Zusatzvolumens hinaus auch auf die gesteuerte Freigabe des Reservevolumens durch Schalten eines Ventils verzichten. Es versteht sich, daß der Schwalltopf mit einem hinreichenden Volumeninhalt auszuführen ist, um eine Mindestreichweite bei Reservebetrieb sicherzustellen.

Eine weitere vorteilhafte Wirkung dieser Anordnung liegt darin, daß bei der Erstbefüllung von Neufahrzeugen generell ein nur geringes Kraftstoffvolumen eingefüllt werden muß, daß aber der Endabnehmer aufgrund der verbesserten Anzeige nicht im Unklaren über die potentielle Rest-Reichweite des Neufahrzeugs gelassen wird.

Die Gesamtheit der Merkmale des nebengeordneten Verfahrensanspruchs 10 gibt ein Steuerverfahren an, das unter Verwendung eines vereinfachten Tanksystems eine besonders gute Fahrerinformation liefert.

Die Merkmale der den unabhängigen Ansprüchen jeweils nachgeordneten Unteransprüche geben vorteilhafte Weiterbildungen an.

Der Schwalltopf hat vorzugsweise ein hinreichendes Volumen, um eine vorbestimmte Restreichweite, z. B. 100 km oder mehr, allein mit seinem anfänglichen Inhalt sicherzustellen. Von besonderem Vorteil hinsichtlich der Fahrerinformation ist es, wenn im Schwalltopf ein kontinuierlich messender Füllstandssensor vorgesehen ist, weil der tatsächliche Reserve-Pegel damit infolge der relativ einfachen Geometrie des Schwalltopfs genau erfaßbar und mittels eines nachgeschalteten Anzeigeinstruments darstellbar ist. Dieser Sensor wird vorteilhafterweise nur im Reservebetrieb gebraucht und aktiviert, so daß eine lange Lebensdauer zu erwarten ist. Andererseits ermöglicht die verbesserte Reserveanzeige dem Fahrzeugführer ein besseres Ausnutzen des Kraftstoffvorrats und der tatsächlichen Reichweite des Fahrzeugs, so daß durch längere Tankintervalle ggf. sogar kürzere Reisezeiten erzielt werden.

Besonders vorteilhaft erscheint, daß man aufgrund der verbesserten Reserveanzeige das übliche Vorrats-Anzeigeinstrument relativ grob auflösend und damit preiswert gestalten kann, weil im kritischen Bereich des Reservebetriebs eine differenzierte und sehr genaue Anzeige möglich wird. Diese kann in besonders einfach ablesbarer Weise in Klartext digital dargestellt werden, während die Grobanzeige als einfaches Analoginstrument ausgeführt werden kann. Man kann alternativ auch eine Skalenumschaltung von einer groben zu einer gespreizten fein auflösenden Teilung vorsehen.

Eine womöglich noch komfortablere Anzeigefunktion kann erreicht werden, wenn man aus einer Kraftstoff-Verbrauchsmessung direkt eine Rest-Reichweite anzeigen läßt, so daß dem Fahrzeugführer eine klare Zielentfernung bis zum Anfahren der nächsten Tankstelle gegeben wird.

Das Tanksystem in der vorstehend erörterten Ausführung ist nicht ausschließlich für die Verwendung in Kraftfahrzeugen geeignet, sondern kann überall da angewendet werden, wo eine hohe Betriebssicherheit abhängig ist von einer genauen Information über einen Restpegel einer Betriebsflüssigkeit.

Weitere Einzelheiten und Vorteile des Gegenstands der Erfindung und dessen Funktionsweise gehen ohne Absicht einer Einschränkung aus der Zeichnung eines Ausführungsbeispiels und deren sich im folgenden anschließender eingehender Beschreibung hervor.

Es zeigen in vereinfachter Darstellung
- Figur 1: eine schematische Gesamtansicht des Tanksystems,
- Figur 2: eine Bauform eines Füllstands- und Reserve-Displays als Detail aus der Figur 1.

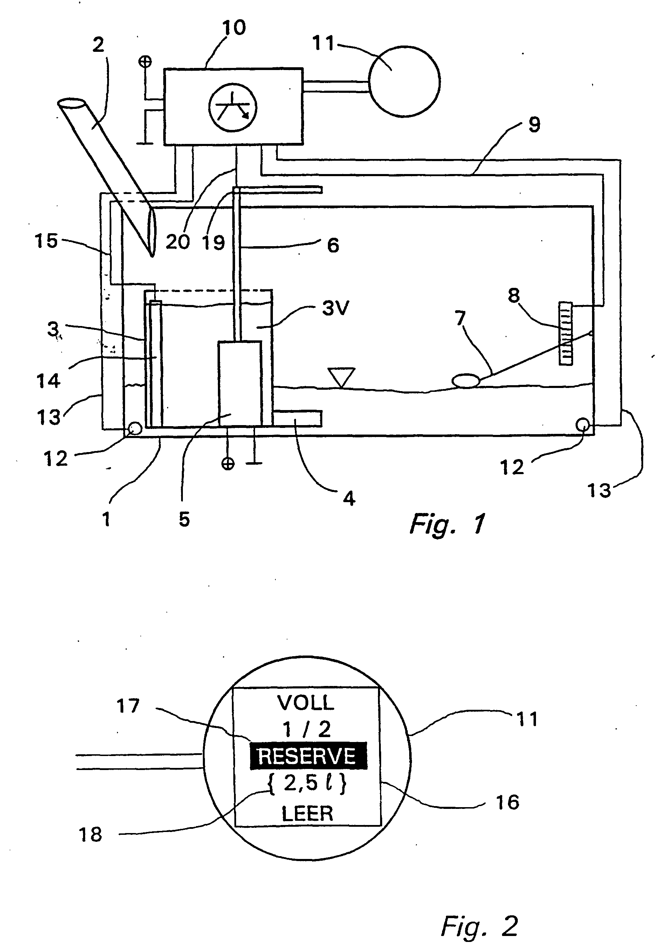

Gemäß Figur 1 ist ein Kraftstoffbehälter oder Tank 1 Hauptbestandteil des Tanksystems. Er ist über ein verschließbares Zulaufrohr 2 befüllbar. Im Bodenbereich des Tanks 1 ist ein oben offener Schwalltopf 3 so angeordnet, daß er beim Tanken vorrangig gefüllt wird. Überschüssiger Kraftstoff fließt dann über den oberen Rand des Schwalltopfs in den Tank 1 ab. Zum ständigen betrieblichen Nachfüllen des Schwalltopfs 3 als "Tank im Tank" ist nur schematisch eine Pumpeinrichtung 4 bodennah im Tank 1 an einer Schwalltopfwand angedeutet. Sie kann in bekannter Weise als Saugstrahlpumpe ausgeführt sein. Sie kann aber ebenso als erste Stufe einer in bekannter Weise im Schwalltopf 3 angeordneten, vorzugsweise elektrisch angetriebenen Kraftstoffpumpe 5 ausgeführt sein. Letztere saugt Kraftstoff bodennah direkt aus dem Schwalltopf 3 ab, um ihn über eine Vorlaufleitung 6 zum hier nicht gezeigten Motor zu fördern. Die Pumpe 5 und der Schwalltopf 3 können in an sich bekannter Weise eine vormontierbare Kraftstoffördereinheit bilden.

Maßnahmen zum Begrenzen des Herausschwappens von Kraftstoff aus dem Schwalltopf 3 sind hier der Vereinfachung halber nicht näher dargestellt. Sie sind gleichwohl vorhanden und können z. B. ein Überlauf- oder Rückschlagventil umfassen. Man kann auch labyrinthartige Überströmquerschnitte am Umfangsrand des Schwalltopfs vorsehen.

Im Tank 1 ist in ebenfalls bekannter Weise ein Füllstandsgeber (Schwimmer) 7 vorgesehen, der zum aktuellen Füllstand analoge elektrische Signale erzeugt (z. B. mit einem Potentiometer 8 oder mittels eines anderen geeigneten Weg- oder Winkelaufnehmers) und diese über eine Leitung 9 einer Steuereinheit 10 zuleitet. Diese steuert die übliche Kraftstoffvorratsanzeige oder Display 11 am Fahrerplatz des Fahrzeugs. Man könnte das Display 11 an sich auch in bekannter Weise direkt mit dem Füllstandsgeber verbinden. Im Sinne der verbesserten Reservemengen-Anzeige ist die erstgenannte Schaltung nicht zwingend notwendig, jedoch von Vorteil.

Zusätzlich zum Füllstandsgeber 7 sind im Tank 1 bodennah noch mehrere Niveauschalter 12 vorgesehen, die zum zuverlässigen Erkennen eines Kraftstoffmangels und zum Umschalten der aktiven Display-Anzeige vorgesehen und ihre elektrischen Ausgangssignale über Leitungen 13 der Steuereinheit 10 zuführen. Man wird die Niveauschalter entfernt vom Füllstandsgeber 7 insbesondere in den Randbereichen des Tankbodens anordnen.

Die Auswertung der Signale dieser Niveauschalter und deren Anordnung sind so zu gestalten und zu verknüpfen, daß erst dann auf Reservebetrieb umgeschaltet und die Reserveanzeige aktiviert wird, wenn das mit hinreichender Sicherheit erforderlich ist, und nicht verfrüht aufgrund des unvermeidlichen Schwappens des Kraftstoffs kurz vor Tiefstand. Das kann z. B. durch Verwenden von Verzögerungsgliedern erreicht werden.

Eine kurze Verzögerung gegenüber dem Eintritt des Zustands "Tank leer ist hinnehmbar, weil angenommen werden kann, daß der Schwalltopf normalerweise immer voll ist und es nicht sofort zur Leerförderung der Kraftstoffpumpe kommen kann.

Insbesondere empfiehlt sich eine kombinierte Auswertung der Signale des Füllstandsgebers 7 und der Niveauschalter 12, die zusammenhängend auch als Schalteinrichtung 7, 12 für den Reservebetrieb anzusehen sind. Eine Mindestbedingung für den Reservebetrieb ist, daß gleichzeitig der Füllstandsgeber und die Niveauschalter einen Kraftstoffmangel anzeigen (UND-Verknüpfung).

Schließlich ist im Schwalltopf 3 zum präzisen Messen und Anzeigen des Schwalltopfinhalts bzw. eines Reservevolumens 3V ein Pegelsensor 14 vorgesehen, dessen elektrisches Ausgangssignal wiederum der Steuereinheit 10 über eine Leitung 15 zugeführt wird. Man muß diesen, vorzugsweise als elektrothermischen Geber ausgeführten Pegelsensor 14 nicht ständig aktiv halten, denn sein Signal wird nur bei Kraftstoffmangel im Tank 1 benötigt. Also genügt es, ihn erst zum Einschalten der Reserveanzeige im Reservebetrieb zu aktivieren.

Es sei angemerkt, daß die hier nur schematisch angedeuteten Leitungen 13, 15, 20 sowohl die eigentlichen Signalleitungen für die einzelnen Sensoren als auch deren ggf. erforderliche Versorgungsleitungen repräsentieren.

Spätestens nach dem Einschalten der Reserveanzeige erhält der Fahrzeugführer, wie in Figur 2 dargestellt, eine genaue, vom Signal auf der Leitung 15 gesteuerte Anzeige über den Restinhalt des Schwalltopfs mittels des differenziert anzeigenden Displays 11.

Dieses umfaßt die gewohnten -und allenfalls grob qualitativ nach VOLL, 1 / 2 und LEER skalierten- Schriftfeld-Anzeigen 16 und zumindest ein Warnfeld 17 für den Reservebetrieb (z. B. durch eine auffällige Warnlampe beleuchtbar oder anderweitig deutlich optisch hervorgehoben). Die Schriftfeld-Anzeigen 16 können in bekannter Weise von einem nicht dargestellten analogen Zeiger bestrichen werden oder ohne mechanische Bauteile durch Farbkontraste dargestellt werden. Die Grobanzeige kann, wie schon erwähnt, grundsätzlich auch direkt mit dem Füllstandsgeber 7 / 8 ohne Umweg über die Steuereinheit verschaltet werden (z. B. in der bekannten Form eines über das Potentiometer 8 mit füllstandsabhängig variablen Spannungswerten versorgbaren Bimetallelements).

Ein gesondertes Anzeigefeld 18 für das Reservevolumen zeigt hier digital eine Restmenge von 2,5 I an. In der Betriebsanleitung für das so ausgestattete Fahrzeug wird darauf hinzuweisen sein, wie weit man noch maximal fahren kann, wenn diese Volumen-Reserveanzeige aktiv wird. Infolge der bereits genannten Maßnahmen gegen das Schwappen von Kraftstoff im Schwalltopf ist bei dessen relativ geringem Querschnitt eine Verfälschung des Signals auf der Leitung 15 nicht zu erwarten. Man wird aber selbstverständlich eine geeignete Dämpfung der Reserveanzeige 18 gegen dynamische Signalanteile vorsehen.

Man kann auch eine direkte Rest-Reichweitenanzeige in Abhängigkeit vom aktuellen Kraftstoffverbrauch oder Mengen- und Reichweitenanzeige kombiniert vorsehen, wenn der Verbrauch mit hinreichender Genauigkeit z. B. in einer Kraftstoff-Einspritzanlage ermittelbar ist und die Steuereinheit 10 mit hierfür geeigneten Algorithmen programmiert ist. Diese Merkmale sind in der Zeichnung vereinfacht durch einen Durchlaufmesser 19 und dessen Verbindung 20 zur Steuereinheit 10 repräsentiert.

Beim Design oder Layout der Reserveanzeige kann man sich aller geeigneten Formen bedienen, also auch z. B. anstelle des hier gezeigten Digital-Displays eine hochauflösende analoge Anzeige verwenden.

Man kann das Display 11 auch so gestalten, daß normalerweise der Schriftzug "Reserve" und die Mengenanzeige unsichtbar sind. Dann kann eine gesonderte Warnlampe ggf. wegfallen, denn durch Sichtbarwerden dieser Anzeigenteile wird der bevorstehende Kraftstoffmangel und die geringe Restreichweite offensichtlich.

Schließlich kann man auch die normale Füllstandsanzeige in besonders augenfälliger Weise vollständig ausblenden und nur die Reserveanzeige nebst hochauflösender Füllstands- und/oder Reichweitenangabe sichtbar lassen.

Abweichend von der hier vereinfachend gezeigten kompakten Bauform kann man -passend zum jeweiligen individuellen Fahrzeugdesign- die normale Kraftstoffanzeige und das Reserve-Display auch räumlich voneinander trennen oder in beliebig abgewandelter räumlicher Anordnung ausführen. Jedenfalls wird man zumindest die Reserveanzeige in zweckmäßiger Weise an einer besonders exponierten Stelle unübersehbar anordnen.

Abschließend seien noch die Funktionsweise und Steuerung dieses modifizierten Tanksystems zusammenfassend erörtert, ausgehend von einem Befüllungsvorgang bei entleertem Tank **1.**

Der Kraftstoff fließt durch das Zulaufrohr 2 direkt in den Schwalltopf 3 und füllt diesen bzw. das darin enthaltene Reservevolumen 3V bevorzugt auf. Bei weiterem Füllen läuft der Kraftstoff anschließend über den oberen Rand des Schwalltopfs 3 in den Haupttank über. Die Niveaugeber 12 und der Füllstandsgeber 7 sprechen an; spätestens bei der Inbetriebnahme (Einschalten des Hauptschalters) des Fahrzeugs wird das Display den aktuellen Füllstand anzeigen.

Für den Fall, daß nur der Schwalltopf mit einer geringen Menge Kraftstoff gefüllt wurde, wird infolge der fehlenden bzw. Kraftstoffmangel anzeigenden Signale der Geber 7 und 12 im Display 11 sofort die Reserveanzeige und die verbleibende Menge sichtbar. Wurde hingegen der Tank 1 ebenfalls wenigstens teilweise gefüllt, so tritt die normale Funktion des Displays 11 -ohne Reserveanzeige- mit den Anzeigeelementen 16 ein. Erst wenn der Tank wieder so weit entleert ist, daß die Kombination der Ausgangssignale der Geber 7 und 12 wieder auf dauerhaften Kraftstoffmangel schließen läßt, tritt wieder die Reserveanzeige 17, 18 in Funktion. Im gleichen Moment wird der Pegelsensor 14 im Schwalltopf 3 aktiviert, so daß die Steuereinheit 10 ein Meßsignal über die Leitung 15 erhält. Sie wird dann die vorgesehene Anzeige im Display 11 einschalten und nach Maßgabe der Sensorsignale auf die Restmenge oder -reichweite einstellen.

Diese Anzeige kann direkt durch Messung des Reservevolumens 3V im Schwalltopf 3 und/oder indirekt durch Erfassung des aktuellen Kraftstoffverbrauchs und entsprechende Auswertung in der Steuereinheit 10 laufend aktualisiert werden.

## Patentansprüche

1. Tanksystem, insbesondere Kraftstofftanksystem, umfassend
- einen Tank (1) mit mindestens einem Füllstandsgeber (7, 8) sowie ein Display (11) zum Anzeigen des Füllstands des Tanks (1),
- ein im Tank angeordnetes, meß- und anzeigbares Reservevolumen (3V), dessen Inhalt beim Erreichen eines Mindestfüllstands im Haupttank (1) als Kraftstoff-Reserve verfügbar ist,
- eine Schalteinrichtung (7, 12) zum Aktivieren eines den Reservebetrieb (= Entnahme von Kraftstoff aus der Reserve) signalisierenden Anzeige (17, 18) mittels einer Steuereinheit (10),
- einen im Haupttank (1) angeordneten Schwalltopf (3), dessen Inhalt von einer Kraftstoffpumpe (5) ansaugbar ist,
- daß der Inhalt des Schwalltopfs (3) das meß- und anzeigbare Reservevolumen (3V) ist.
**dadurch gekennzeichne**t, daß das Reservevolumen (3V) über ein Zulaufrohr (2) stets vorrangig betankbar ist und daß zusätzlich zum Füllstandsgeber (7,8) bodennah im Tank mindestens ein weiterer an die Steuereinheit (10) angeschlossener Niveaugeber (12) zum Erfassen eines Kraftstoffmangels vorgesehen ist.

2. Tanksystem nach Anspruch 1, **dadurch gekennzeichnet, daß** der direkt über das Zulaufrohr (2) auffüllbare Schwalltopf (3) ein für eine vorbestimmbare Restreichweite hinreichend großes Volumen hat.

3. Tanksystem nach Anspruch 1 oder 2, **dadurch gekennzeichnet, daß** im Schwalltopf (3) ein dessen Inhalt kontinuierlich erfassender Pegelsensor (14) angeordnet ist.

4. Tanksystem nach Anspruch 3, **dadurch gekennzeichnet, daß** der Pegelsensor (14) mittels der Steuereinheit (10) in Abhängigkeit vom Füllstand des Tanks (1) aus- und einschaltbar ist und nur bei Kraftstoffmangel aktiviert wird.

5. Tanksystem nach einem der vorstehenden Ansprüche, **dadurch gekennzeichnet, daß** ein erstes Display (11) zum wenigstens qualitativen Anzeigen des Füllstands und eine besondere Reserveanzeige (17, 18) zum Anzeigen des Reservebetriebs und/oder des verbleibenden Reservevolumens (3V) und/oder der verbleibenden Rest-reichweite vorgesehen und von der Steuereinheit (10) nach Maßgabe von Meßsignalen steuerbar ist.

6. Tanksystem nach einem der vorstehenden Ansprüche, **dadurch gekennzeichnet, daß** die Reserveanzeige (17, 18) zum digitalen Anzeigen einer Mengen- und/oder Reichweitenangabe vorgesehen ist.

7. Tanksystem nach einem der vorstehenden Ansprüche, **dadurch gekennzeichnet, daß** der Schwalltopf (3) und die Kraftstoffpumpe (5) eine vormontierbare Kraftstoffördereinheit bilden.

8. Tanksystem nach einem der vorstehenden Ansprüche, **dadurch gekennzeichnet, daß** die Reserveanzeige (17, 18) im Normalbetrieb unsichtbar ist und erst bei Umschaltung sichtbar wird.

9. Tanksystem nach einem der vorstehenden Ansprüche, **dadurch gekennzeichnet, daß** eine Einrichtung (19) zum Erfassen des aktuellen Verbrauchs vorgesehen und mit der Steuereinheit (10) verbunden ist, wobei letztere das Signal der Einrichtung zur direkten Darstellung einer Restreichweite auf dem Display (11) auswertet.

10. Verfahren zum selbsttätigen Steuern und Betreiben eines Tanksystems, insbesondere eines Tanksystems nach einem der vorstehenden Ansprüche, bei dem
- bei Kraftstoffmangel im Haupttank ein bevorzugt befülltes Reservevolumen selbsttätig zu der aus einem Schwalltopf gespeisten Kraftstoffpumpe freigegeben wird und
- die Umschaltung auf den Reservebetrieb sowie das verfügbare Reservevolumen und/oder eine Restreichweite mittels Anzeige-elementen angezeigt werden, die von einer Meßsignale auswertenden Steuereinheit aktivierbar sind,
**dadurch gekennzeichnet, daß**
- der Kraftstoffmangel im Haupttank mittels eines Füllstandsgebers und mindestens eines zusätzlichen Niveaugebers erfaßt wird und entsprechende Signale in der Steuereinheit verknüpft und ausgewertet werden,
- die Steuereinheit bei oder nach dem Umschalten auf Reservebetrieb einen innerhalb des Schwalltopfs angeordneten Pegelsensor aktiviert und dessen Signal zum Anzeigen des durch den Schwalltopfinhalt selbst gebildeten Reservevolumens auswertet.

11. Verfahren nach Anspruch 10, **dadurch gekennzeichnet, daß** die Steuereinheit nur dann auf Reservebetrieb umschaltet, wenn die Signale des Füllstandsgebers und des mindestens einen Niveaugebers in UND-Verknüpfung auf permanenten Kraftstoffmangel schließen lassen.

12. Verfahren nach Anspruch 10 oder 11, **dadurch gekennzeichnet, daß** die Umschaltung auf Reservebetrieb zeitlich gegenüber dem Eintritt eines Signalzustands "Tank-leer" verzögert wird.

## Claims

1. Tank system, in particular fuel tank system, comprising
- a tank (1) having at least one level gauge (7, 8) and a display (11) for indicating the filling level of the tank (1),
- a reserve volume (3V) which is arranged in the tank and can be measured and displayed and whose contents are available as a fuel reserve when a minimum filling level is reached in the main tank (1),
- a switching device (7, 12) for activating a display (17, 18) which signals the reserve mode (= removal of fuel from the reserve), by means of a control unit (10),
- a surge tank (3) which is arranged in the main tank (1) and whose contents can be drawn in by a fuel pump (5),
- the fact that the contents of the surge tank (3) are the reserve volume (3V) which can be measured and displayed,
**characterized in that** the reserve volume (3V) can always be filled with priority via an inflow pipe (2) and in that, in addition to the level gauge (7, 8), at least one further level sensor (12) which is connected to the control unit (10) and has the purpose of sensing a lack of fuel is provided near to the bottom in the tank.

2. Tank system according to Claim 1, **characterized in that** the surge tank (3) which can be filled directly via the inflow pipe (2) has a large volume which is sufficient for a predefinable residual travel range.

3. Tank system according to Claim 1 or 2,
**characterized in that** a level sensor (14) which continuously senses the contents of the surge tank (3) is arranged in the said surge tank.

4. Tank system according to Claim 3, **characterized in that** the level sensor (14) can be switched off and on by means of the control unit (10) as a function of the filling level of the tank (1) and is activated only when there is a lack of fuel.

5. Tank system according to one of the preceding claims, **characterized in that** a first display (11) for at least qualitatively displaying the filling level and a particular reserve display (17, 18) for displaying the reserve mode and/or the remaining reserve volume (3V) and/or the remaining residual travel range are provided and can be controlled by the control unit (10) in accordance with measurement signals.

6. Tank system according to one of the preceding claims, **characterized in that** the reserve display (17, 18) is provided for digitally displaying quantity and/or travel range information.

7. Tank system according to one of the preceding claims, **characterized in that** the surge tank (3) and the fuel pump (5) form a premountable fuel feeding unit.

8. Tank system according to one of the preceding claims, **characterized in that** the reserve display (17, 18) is invisible during normal operation and cannot be viewed until switching over occurs.

9. Tank system according to one of the preceding claims, **characterized in that** a device (19) for sensing the current consumption is provided and is connected to the control unit (10), the latter evaluating the signal of the device for directly displaying a residual travel range on the display (11).

10. Method for automatically controlling and operating a tank system, in particular a tank system according to one of the preceding claims, in which
- when there is a lack of fuel in the main tank a reserve volume which is preferably filled is automatically released to the fuel pump fed from a surge tank, and
- the switching over to the reserve mode and the available reserve volume and/or a residual travel range are displayed by means of display elements which can be activated by a control unit which evaluates measurement signals,
**characterized in that**
- the lack of fuel in the main tank is sensed by means of a level gauge and at least one additional level sensor and corresponding signals are logically connected and evaluated in the control unit,
- the control unit activates, during or after the switching over to reserve mode, a level sensor which is arranged within the surge tank, and evaluates the signal of said level sensor in order to display the reserve volume which is formed by the actual contents of the surge tank.

11. Method according to Claim 10, **characterized in that** the control unit is switched over to reserve mode only if the signals of the level gauge and of the at least one level sensor in an AND operation allow a permanent lack of fuel to be inferred.

12. Method according to Claim 10 or 11,
**characterized in that** the switching over to reserve mode is delayed in comparison with the occurrence of a "tank empty" signal state.

## Revendications

1. Système de réservoir, en particulier système de réservoir de carburant, comprenant :
- un réservoir (1) avec au moins une sonde de niveau de remplissage (7, 8) ainsi qu'un écran (11) pour l'affichage du niveau de remplissage du réservoir (1),
- un volume de réserve (3V) disposé dans le réservoir, apte à être mesuré et affiché, dont le contenu est disponible comme réserve de carburant lorsqu'un niveau de remplissage minimum est atteint dans le réservoir principal (1),
- un dispositif de commutation (7, 12) pour activer au moyen d'une unité de commande (10) un affichage qui signale le fonctionnement sur la réserve (c'est-à-dire la prise de carburant dans la réserve),
- une cuve (3) de réception du jet de remplissage, disposée dans le réservoir principal (1) et dont le contenu peut être aspiré par une pompe à carburant (5),
- le contenu de la cuve (3) de réception du jet de remplissage constituant le volume de réserve (3V) apte à être mesuré et affiché,
**caractérisé en ce que** le volume de réserve (3V) peut toujours être rempli de façon prioritaire par un tube de remplissage (2), et en ce qu'en plus de la sonde de niveau de remplissage (7, 8), au moins une autre sonde de niveau (12) raccordée à l'unité de commande (10) est prévue à proximité du fond du réservoir pour la détection de l'absence de carburant.

2. Système de réservoir selon la revendication 1, **caractérisé en ce que** la cuve (3) de réception du jet de remplissage apte à être remplie par le tube de remplissage (2) présente un volume suffisamment grand pour une distance pouvant encore être parcourue prédéterminable.

3. Système de réservoir selon la revendication 1 ou 2, **caractérisé en ce que** dans la cuve (3) de réception du jet de remplissage est disposé un détecteur de niveau (14) qui détecte son contenu en continu.

4. Système de réservoir selon la revendication 3, **caractérisé en ce que** le détecteur de niveau (14) peut être débranché et branché au moyen de l'unité de commande (10) en fonction du niveau de remplissage du réservoir (1) et n'est activé qu'en cas d'absence de carburant.

5. Système de réservoir selon l'une des revendications précédentes, **caractérisé en ce qu'**un premier écran (11) est prévu pour afficher au moins qualitativement le niveau de remplissage, et un affichage spécial de réserve (17, 18) est prévu pour afficher le fonctionnement sur la réserve et/ou le volume de réserve (3V) restant et/ou la distance qui peut encore être parcourue, et peut être commandé par l'unité de commande (10) en fonction de signaux de mesure.

6. Système de réservoir selon l'une des revendications précédentes, **caractérisé en ce que** l'affichage de la réserve (17, 18) est prévu pour afficher numériquement une donnée de quantité et/ou de distance pouvant encore être parcourue.

7. Système de réservoir selon l'une des revendications précédentes, **caractérisé en ce que** la cuve (3) de réception du jet de remplissage et la pompe à carburant (5) forment une unité prémontable de fourniture de carburant.

8. Système de réservoir selon l'une des revendications précédentes, **caractérisé en ce que** l'affichage de la réserve (17, 18)est invisible en fonctionnement normal et n'est visible qu'après commutation.

9. Système de réservoir selon l'une des revendications précédentes, **caractérisé en ce qu'**un dispositif (19) de détection de la consommation effective est prévu et est relié à l'unité de commande (10), cette dernière évaluant le signal du dispositif en vue de présenter directement sur l'écran (11) une distance pouvant encore être parcourue.

10. Procédé de commande et d'utilisation automatique d'un système de réservoir, en particulier d'un système de réservoir selon l'une des revendications précédentes, dans lequel :
- en cas d'absence de carburant dans le réservoir principal, un volume de réserve rempli de préférence est automatiquement libéré pour la pompe à carburant alimentée à partir d'une cuve de réception du jet de remplissage, et
- la commutation sur le fonctionnement sur la réserve ainsi que le volume disponible de réserve et/ou une distance pouvant encore être parcourue sont affichés au moyen d'éléments d'affichage qui peuvent être activés par une unité de commande évaluant des signaux de mesure,
**caractérisé en ce que**
- l'absence de carburant dans le réservoir principal est détectée au moyen d'une sonde de niveau de remplissage et d'au moins une sonde de niveau supplémentaire, et des signaux correspondants sont associés et évalués dans l'unité de commande, et
- lors de la commutation sur le fonctionnement sur la réserve ou après celle-ci, l'unité de commande active un détecteur de niveau disposé à l'intérieur de la cuve de réception du jet de remplissage et évalue ses signaux pour afficher le volume de réserve formé par le contenu de la cuve proprement dite de réception du jet de remplissage.

11. Procédé selon la revendication 10, **caractérisé en ce que** l'unité de commande ne commute sur le fonctionnement sur la réserve que si les signaux de la sonde de niveau de remplissage et de l'au moins une sonde de niveau reliés dans une connexion ET permettent de conclure qu'il y a absence permanente de carburant.

12. Procédé selon la revendication 10 ou 11, **caractérisé en ce que** la commutation sur le fonctionnement sur la réserve est retardée temporellement par rapport à l'entrée d'un signal d'état "réservoir vide".
